# EUROPEAN PATENT APPLICATION

(11) **EP 4 737 396 A1**
(43) Date of publication of application: **06.05.2026**
(21) Application number: 24832439.4
(22) Date of filing: 26.06.2024
(51) Int. Cl.: C01G 53/00, H01M 4/525, H01M 4/505, H01M 4/36, H01M 4/131, H01M 10/052, H01M 4/02

(54) **METHOD FOR PREPARING POSITIVE ELECTRODE ACTIVE MATERIAL FOR LITHIUM SECONDARY BATTERY AND LITHIUM SECONDARY BATTERY COMPRISING POSITIVE ELECTRODE ACTIVE MATERIAL PREPARED THEREBY**

(30) Priority: 27.06.2023 KR 20230082787
(71) Applicant: Posco Future M Co., Ltd., Pohang-si, Gyeongsangbuk-do 37918 (KR)
(72) Inventor: MYUNG, Minhoon, Pohang-si, Gyeongsangbuk-do 37918 (KR); LEE, Subin, Pohang-si, Gyeongsangbuk-do 37918 (KR); LEE, Byong June, Pohang-si, Gyeongsangbuk-do 37918 (KR); SIM, Sung Keun, Pohang-si, Gyeongsangbuk-do 37918 (KR); LEE, Seungwon, Pohang-si, Gyeongsangbuk-do 37918 (KR); CHOI, Kwonyoung, Pohang-si, Gyeongsangbuk-do 37918 (KR)
(74) Representative: Meissner Bolte Partnerschaft mbB
(86) International application number: PCT/KR2024/008912
(87) International publication number: WO 2025/005661

(57) **Abstract**

The present embodiments relate to a method for preparing a positive electrode active material for a lithium secondary battery and a lithium secondary battery comprising the same. A method for preparing a positive electrode active material for a lithium secondary battery according to one embodiment includes: preparing a metal hydroxide comprising nickel, cobalt, and manganese; mixing the metal hydroxide with a lithium raw material and dopant raw materials to prepare a mixture; pre-calcining the mixture to obtain a pre-calcined product; calcining the pre-calcined product in a two-step process comprising a first-step calcination and a second-step calcination to obtain a calcined material in a single-particle form; and mixing the calcined material with coating raw materials and heat-treating the mixture to obtain a metal oxide having a coating layer formed thereon, wherein, in the step of obtaining the calcined material, the first-step calcination may be performed at a temperature of 870°C to 915°C for 2 hours to 6 hours.

## Description

### [Technical Field]

The present embodiments relate to a method for manufacturing a positive electrode active material for a lithium secondary battery and to a lithium secondary battery comprising a positive electrode active material manufactured by the method.

### [Background Art]

In recent years, driven by the explosive demand for electric vehicles and the need for extended driving ranges, the development of secondary batteries having high capacity and high energy density has been actively pursued worldwide. In particular, high-nickel NCM positive electrode materials having a high nickel content have been used to satisfy such demands.

However, as the nickel content increases, particle strength deteriorates, resulting in the generation of microcracks during charge and discharge. In addition, such microcracks increase the specific surface area of the positive electrode material, and accordingly, increase reactions with the electrolyte, which leads to increased gas generation. Furthermore, due to structural instability, unstable Ni³⁺ is reduced to stable Ni²⁺ and is converted into stable NiO, thereby increasing cation mixing. Thus, it is difficult to practically apply such materials as positive electrode active materials for lithium-ion batteries for use in electric vehicles or energy storage.

To address these issues, an approach has been proposed in which a positive electrode material is prepared in a single-particle form by maximizing the size of primary particles, instead of using a multiparticle form in which primary particles are aggregated into secondary particles.

However, to manufacture a positive electrode material in a single-particle form, calcination must be performed at a higher temperature compared to multiparticle materials, and during such calcination, under-sintering commonly occurs, resulting in defects in the layered crystal structure and deterioration of electrochemical characteristics such as capacity and output. In addition, when the calcination temperature is lowered to address this issue, the crystal grain size within the single particle does not sufficiently grow, resulting in deterioration of particle strength and lifespan characteristics.

Moreover, to apply such a single-particle positive electrode material to industrial production, productivity improvement is also required.

### [Detailed Description of the Invention]

### [Technical Problem]

The present embodiments are directed to providing a method for manufacturing a positive electrode active material for a lithium secondary battery that exhibits excellent electrochemical characteristics while also achieving improved productivity, and to providing a lithium secondary battery comprising the same.

### [Technical Solution]

A method for manufacturing a positive electrode active material for a lithium secondary battery according to one embodiment includes: preparing a metal hydroxide comprising nickel, cobalt, and manganese; mixing the metal hydroxide with a lithium raw material and dopant raw materials to prepare a mixture; pre-calcining the mixture to obtain a pre-calcined product; calcining the pre-calcined product in a two-step process comprising a first-step calcination and a second-step calcination to obtain a calcined material in a single-particle form; and mixing the calcined material with coating raw materials and heat-treating the mixture to obtain a metal oxide having a coating layer formed thereon, wherein, in the step of obtaining the calcined material, the first-step calcination may be performed at a temperature of 870°C to 915°C for 2 hours to 6 hours.

A positive electrode active material for a lithium secondary battery according to another embodiment includes a nickel-containing metal oxide in a single-particle form; and a coating layer disposed on a surface of the nickel-containing metal oxide, wherein the nickel-containing metal oxide comprises at least three kinds of dopant elements, and wherein, for the metal oxide having the coating layer, the number of non-grown particles measured in a SEM image at 5000× magnification and having a size of 2.5 cm × 1.0 cm may be two or fewer.

A lithium secondary battery according to yet another embodiment may include a positive electrode comprising the positive electrode active material for a lithium secondary battery according to the aforementioned embodiment.

### [Effects of the Invention]

According to the present embodiments, by performing a pre-calcination before the main calcination and performing the main calcination in a one-step process comprising a first-step calcination and a second-step calcination, it is possible to provide a method for manufacturing a positive electrode active material for a lithium secondary battery that exhibits excellent electrochemical characteristics while also achieving improved productivity.

### [Brief Description of the Drawings]

FIG. 1 is a SEM image of the positive electrode active material manufactured according to Example 1 at 5000× magnification.
FIG. 2 is a SEM image of the positive electrode active material manufactured according to Comparative Example 1 at 5000× magnification.

### [Best Mode for Carrying Out the Invention]

The terms first, second, and third, and the like, are used to describe various parts, components, regions, layers, and/or sections, but are not limited thereto. These terms are used only to distinguish one part, component, region, layer, or section from another part, component, region, layer, or section. Thus, a first part, component, region, layer, or section described below may be referred to as a second part, component, region, layer, or section within the scope of the present invention.

The terminology used herein is intended only to describe particular embodiments and is not intended to limit the present invention. The singular forms used herein include plural forms as well unless the context clearly indicates otherwise. The term "comprising/including/containing" as used in the specification, specifies the presence of stated features, regions, integers, steps, operations, elements, and/or components, but does not preclude the presence or addition of one or more other features, regions, integers, steps, operations, elements, and/or components.

When a part is described as being "on" or "over/above" another part, it may be directly on or over the other part, or intervening parts may be present therebetween. In contrast, when a part is described as being "directly on" or "directly over/above" another part, no intervening part is present therebetween.

Unless otherwise defined, all terms used herein, including technical and scientific terms, have the same meanings as commonly understood by a person of ordinary skill in the art to which the present invention pertains. Terms defined in commonly used dictionaries shall be interpreted as having meanings consistent with the relevant technical literature and the present disclosure, and shall not be interpreted in an idealized or overly formal sense unless explicitly defined otherwise.

In addition, unless otherwise specified, % refers to weight percent, and 1 ppm means 0.0001 weight percent.

In the present specification, the phrase "combinations thereof" used in a Markush expression refers to a mixture or combination of one or more components selected from the group of components described in the Markush expression, meaning that one or more of the components selected from the group may be included.

Hereinafter, embodiments of the present invention will be described in detail so that a person skilled in the art can readily carry out the invention. However, the present invention may be embodied in various different forms and is not limited to the embodiments described herein.

### Method for Manufacturing a Positive Electrode Active Material for a Lithium Secondary Battery

A method for manufacturing a positive electrode active material for a lithium secondary battery according to one embodiment includes: preparing a metal hydroxide comprising nickel, cobalt, and manganese; mixing the metal hydroxide with a lithium raw material and dopant raw materials to prepare a mixture; pre-calcining the mixture to obtain a pre-calcined product; calcining the pre-calcined product in a one-step process comprising a first calcination and a second calcination to obtain a calcined material in a single-particle form; and mixing the calcined material with coating raw materials and heat-treating the mixture to obtain a metal oxide having a coating layer formed thereon, wherein, in the step of obtaining the calcined material, the first calcination may be performed at a temperature of 870°C to 930°C for 2 hours to 6 hours.

In the present embodiment, by performing pre-calcination and subsequently performing the main calcination in two stages, it is possible to provide a method for manufacturing a single-particle positive electrode active material that exhibits excellent electrochemical characteristics while also achieving improved productivity.

In the present specification, a "single particle" may include at least one selected from: a single-crystal structure formed as one particle; and a structure distinguishable as one lump when observing a cross-section of a powder through scanning electron microscopy (SEM), in which approximately 2 to 20 particles, or 2 to 10 particles, are aggregated. Here, a particle refers to a grain or crystallite.

A positive electrode active material in a single-particle form, as in the present embodiment, has a smaller specific surface area compared to a conventional positive electrode active material in a secondary-particle form in which dozens to hundreds of primary particles are aggregated. Accordingly, gas generation from side reactions with the electrolyte can be reduced, particle strength can be increased to suppress particle breakage during rolling, and crack formation during repeated charging and discharging can be reduced. Thus, compared to secondary particles, lifespan and safety characteristics are excellent, and a high energy density per volume can be realized.

First, a step of preparing a metal hydroxide comprising nickel, cobalt, and manganese is performed.

The nickel-containing metal hydroxide may be manufactured, for example, by adding a chelating-agent-containing solution and a pH-adjusting-agent-containing solution to a transition-metal-containing solution comprising a nickel raw material and, optionally, a cobalt raw material and/or a manganese raw material to conduct a co-precipitation reaction.

The nickel raw material is not particularly limited as long as it is a material used in the preparation of a precursor for a positive electrode active material in the art. For example, the nickel raw material may include nickel-containing sulfates, acetates, nitrates, halides, sulfides, hydroxides, oxides, or oxyhydroxides. Specific examples include NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, fatty-acid nickel salts, nickel halides, or combinations thereof.

The cobalt raw material is not particularly limited as long as it is commonly used in the preparation of precursors for positive electrode active materials. Examples include cobalt-containing sulfates, acetates, nitrates, halides, sulfides, hydroxides, oxides, or oxyhydroxides. Specific examples include CoSO₄, CoSO₄·7H₂O, Co(OH)₂, CoOOH, Co(OCOCH₃)₂·4H₂O, Co(NO₃)₂·6H₂O, or combinations thereof.

The manganese raw material is not particularly limited as long as it is used in the preparation of precursors for positive electrode active materials. Examples include manganese-containing sulfates, acetates, nitrates, halides, sulfides, hydroxides, oxides, oxyhydroxides, or combinations thereof. Specific examples include MnSO₄, MnCO₃, Mn(NO₃)₂, manganese acetate, manganese dicarboxylates, manganese citrates, fatty-acid manganese salts, manganese oxides such as Mn₂O₃, MnO₂, and Mn₃O₄, manganese oxyhydroxides, manganese chlorides, or combinations thereof.

The transition-metal-containing solution may be prepared by adding the nickel raw material and, optionally, the cobalt raw material or the manganese raw material to a solvent, specifically water, or a mixed solvent of water and an organic solvent that can be uniformly mixed with water (e.g., an alcohol).

The chelating-agent-containing solution functions as a complexing agent and may include, for example, NH₃, NH₄OH, (NH₄)₂SO₄, NH₄NO₃, NH₄Cl, CH₃COONH₄, NH₄CO₃, or combinations thereof. This solution may be used in aqueous form, and the solvent may be water or a mixed solvent of water and an organic solvent (e.g., an alcohol).

Next, a step of mixing the metal hydroxide, the lithium raw material, and the dopant raw materials to prepare a mixture is performed.

The lithium raw material is not particularly limited as long as it is commonly used in the art, and may be Li₂CO₃, LiOH, or LiOH·H₂O. In the present embodiment, Li₂CO₃ is used to reduce production cost and improve economic efficiency.

The molar ratio of lithium (Li) to the total metal components excluding lithium (Me), i.e., Li/Me, may be in a range of 1.0 to 1.1, or 1.01 to 1.08.

The dopant raw materials may include an Al raw material, a Y raw material, and a Zr raw material.

The Al raw material may include at least one selected from Al(OH)₃, Al₂(SO₄)₃, Al(NO₃)₃, Al₂O₃, and AlCl₃.

The Y raw material may include at least one selected from Y₂O₃, Y(SO₄)₂, Y₂(SO₄)₃, and Y(NO₃)₃.

The Zr raw material may include at least one selected from ZrO₂, Zr(SO₄)₂, ZrS₂, and Zr(NO₃)₄.

The Al raw material may be mixed in an amount of 500 ppm to 1000 ppm, or 800 ppm to 1000 ppm, based on the total weight of the metal hydroxide.

The Y raw material may be mixed in an amount of 500 ppm to 1200 ppm, or 800 ppm to 1200 ppm, based on the total weight of the metal hydroxide.

The Zr raw material may be mixed in an amount of 500 ppm to 2000 ppm, or 800 ppm to 2000 ppm, based on the total weight of the metal hydroxide.

When the input amounts of the Al, Y, and Zr raw materials satisfy these ranges, a positive electrode active material exhibiting improved capacity retention and resistance characteristics can be manufactured.

Next, the mixture is pre-calcined to obtain a pre-calcined product.

The pre-calcination may be performed at a temperature of 650°C to 770°C for 2 hours to 12 hours, or at 680°C to 740°C for 3 hours to 10 hours. By performing the pre-calcination in this manner, the production yield of the positive electrode active material can be increased while maintaining electrochemical characteristics, thus improving economic efficiency.

Next, a step of calcining the pre-calcined product in a one-step process comprising a first calcination and a second calcination to obtain a calcined material in a single-particle form is performed.

The first calcination may be performed at a temperature of 870°C to 930°C for 2 hours to 6 hours, or at 880°C to 920°C for 3 hours to 5 hours.

The second calcination may be performed at a temperature of 750°C to 870°C for 5 hours to 14 hours, or at 780°C to 840°C for 7 hours to 12 hours.

Specifically, in the present embodiment, by performing the first and second calcinations in a one-step process along with the pre-calcination, a single-particle positive electrode active material exhibiting excellent electrochemical characteristics can be manufactured. Furthermore, productivity is improved, thereby ensuring excellent economic efficiency.

Next, a step of mixing the calcined material with coating raw materials and heat-treating the mixture to obtain a metal oxide having a coating layer formed thereon is performed.

The coating raw materials may include a Co coating raw material and an Al coating raw material.

The Co coating raw material may include at least one selected from Co(OH)₂, CoO, Co₃O₄, CoCO₃, cobalt acetate, and cobalt oxalate.

The Al coating raw material may include at least one selected from Al(OH)₃, Al₂(SO₄)₃, Al(NO₃)₃, Al₂O₃, and AlCl₃.

The Co coating raw material may be mixed in an amount of 1.5 mol% to 3 mol%, and more specifically, 2.0 mol% to 2.8 mol%, based on the calcined material.

The Al coating raw material may be mixed in an amount of 500 ppm to 1000 ppm, or 800 ppm to 1000 ppm, based on the calcined material.

When the content ranges of the Co and Al coating raw materials satisfy the above, interfacial side reactions between the positive electrode active material and the electrolyte can be suppressed, and a lithium secondary battery exhibiting improved capacity and resistance characteristics can be manufactured.

In the step of obtaining the metal oxide having the coating layer, the heat treatment may be performed at a temperature of 660°C to 760°C for 3 hours to 8 hours, or at 690°C to 750°C for 4 hours to 6 hours. When the heat treatment conditions satisfy these ranges, the amount of residual lithium remaining on the surface can be reduced and the surface structure can be stabilized. In addition, the initial resistance of the positive electrode active material of the present embodiment can be reduced.

In the present embodiment, the step of obtaining the calcined material may further include, as necessary, a pulverizing step after obtaining the calcined material. That is, after obtaining the calcined material, a pulverization step may be performed before the coating process.

The pulverizing step may be performed after cooling the calcined material to a temperature of 50°C to 200°C. Cooling to this temperature range can suppress reactions between external moisture and the calcined material and suppress an increase in residual lithium.

The pulverization may be performed by a conventional method commonly used in the art. For example, the pulverization may be performed using a rotor mill, ball mill, pin mill, jet mill, bead mill, or roll mill, but is not limited thereto.

The metal oxide having the coating layer formed thereon and manufactured as described above may be represented by Formula 1 below:

[Formula 1] Liₐ[NiₓCo_{γ}Mn_{z}M_{1W₁}M_{2W₂}]O₂

where 0.8 ≤ a ≤ 1.2, 0.8 ≤ x ≤ 0.99, 0 < y ≤ 0.06, 0 < z ≤ 0.14, 0 < w₁ ≤ 0.1, 0 ≤ w₂ ≤ 0.1, and x + y + z + w₁ + w₂ = 1; M₁ comprises Al, Y, and Zr; and M₂ comprises one or more selected from B, Al, Mg, Ti, Nb, W, Sc, Si, V, Fe, Y, Mo, Ce, Hf, Ta, La, and Sr.

In Formula 1, the nickel content may be 0.8 mol or more, and more specifically 0.8 mol to 0.99 mol, 0.82 mol to 0.95 mol, or 0.82 mol to 0.93 mol, based on a total of 1 mol of transition metals included in the doped nickel-containing metal oxide. When the nickel content satisfies this range, a high-capacity battery can be realized.

In addition, the total amount of dopant elements M₁ and M₂ in Formula 1 may be greater than 0 and 0.2 mol or less, and more specifically 0.0005 mol to 0.1 mol, 0.0005 mol to 0.08 mol, 0.0005 mol to 0.04 mol, or 0.001 mol to 0.03 mol, based on a total of 1 mol of nickel, cobalt, manganese, and dopant elements. The amount of dopant elements in the formula refers to the doping amount included in the final obtained positive electrode active material.

Meanwhile, the average particle diameter (D50) of the positive electrode active material according to the present embodiment may be 3 µm or more, and more specifically from 3 µm to 6 µm. When the average particle diameter of the single-particle positive electrode active material satisfies this range, a lithium secondary battery exhibiting excellent electrochemical characteristics such as lifespan characteristics and resistance-increase characteristics can be realized. Furthermore, since the energy density per volume can also be increased, very advantageous effects can be obtained.

### Positive Electrode

In another embodiment, a positive electrode is provided, the positive electrode comprising a current collector and a positive electrode active material layer located on one surface of the current collector, the positive electrode active material layer comprising the positive electrode active material manufactured according to the embodiment described above.

The positive electrode active material comprises a nickel-containing metal oxide in a single-particle form; and a coating layer disposed on a surface of the nickel-containing metal oxide, wherein the nickel-containing metal oxide comprises at least three dopant elements, and wherein, for the metal oxide having the coating layer formed thereon, the number of under-grown particles measured in a 2.5 cm × 1.0 cm SEM image at 5,000× magnification may be two or fewer.

In the present specification, an "under-grown particle" refers to a secondary-particle-type morphology in which more than 20 primary particles are aggregated, and simultaneously the average particle diameter (D50) of the particle is 5 µm or less.

In the positive electrode active material of the present embodiment, the ratio of lithium hydroxide to lithium carbonate among the surface residual lithium (LiOH/Li₂CO₃) may be in a range of 1.0 to 2.0, or 1.5 to 2.0.

In addition, the positive electrode active material may satisfy that, when subjected to five pressings using a roll press at a press gauge of 0.01 mm, the total amount of fines having a particle diameter of less than 1 µm is 2.5 vol% or less.

The characteristics of the positive electrode active material constituting the positive electrode active material layer are the same as those described above; therefore, a detailed description of the active material is omitted.

The current collector may be, for example, stainless steel, aluminum, nickel, titanium, baked carbon, or a surface-treated material in which carbon, nickel, titanium, or silver is formed on the surface of aluminum or stainless steel.

Meanwhile, the positive electrode active material layer may further include a binder and a conductive agent.

The binder serves to improve adhesion among the positive electrode active material particles and adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM) rubber, sulfonated EPDM, styrene-butadiene rubber (SBR), fluororubber, and various copolymers thereof. One or more of these may be used, but the binder is not limited thereto. The binder may be included in an amount of 1 wt% to 30 wt% based on the total weight of the positive electrode active material layer.

The conductive agent imparts electrical conductivity to the electrode and may be any material that provides electronic conductivity without causing chemical changes in the battery. Specific examples include carbonaceous materials such as natural graphite, artificial graphite, carbon black, acetylene black, Ketjen black, channel black, furnace black, lamp black, thermal black, and carbon fibers; metal powders or fibers such as copper, nickel, aluminum, and silver; conductive whiskers such as zinc oxide and potassium titanate; conductive metal oxides such as titanium oxide; and conductive polymers such as polyphenylene derivatives. One or more of these may be used, but the conductive agent is not limited thereto. The conductive agent may be included in an amount of 1 wt% to 30 wt% based on the total weight of the positive electrode active material layer.

The positive electrode may be manufactured by a conventional method except that the positive electrode active material described above is used.

Specifically, the positive electrode may be manufactured by coating a positive electrode active material layer-forming composition including the positive electrode active material and, optionally, a binder, a conductive agent, or a solvent onto the positive electrode current collector, followed by drying and rolling. The types and amounts of the positive electrode active material, binder, and conductive agent may be as described above.

The solvent may be any solvent generally used in the art, including dimethyl sulfoxide (DMSO), isopropyl alcohol, N-methyl-2-pyrrolidone (NMP), acetone, or water, and one or more of these may be used. The amount of the solvent is sufficient to dissolve or disperse the active material, conductive agent, and binder to achieve a slurry viscosity that provides good coating uniformity while maintaining appropriate coating thickness and manufacturing yield.

Alternatively, the positive electrode may be manufactured by casting the positive electrode active material layer-forming composition onto a separate support, peeling the resulting film from the support, and laminating the film onto the positive electrode current collector.

### Lithium Secondary Battery

In another embodiment, a lithium secondary battery is provided, the lithium secondary battery comprising the positive electrode described above.

The lithium secondary battery may specifically comprise a positive electrode, a negative electrode disposed to face the positive electrode, a separator interposed between the positive and negative electrodes, and an electrolyte, wherein the positive electrode is as described previously. In addition, the lithium secondary battery may further include a battery case accommodating an electrode assembly comprising the positive electrode, the negative electrode, and the separator, and a sealing member sealing the battery case.

In the lithium secondary battery, the negative electrode may include a negative electrode current collector and a negative electrode active material layer disposed on the negative electrode current collector.

The negative electrode current collector is not particularly limited so long as it has high electrical conductivity and does not induce chemical changes in the battery. Examples include copper, stainless steel, aluminum, nickel, titanium, baked carbon, copper or stainless steel having a surface treated with carbon, nickel, titanium, or silver, and aluminum-cadmium alloys. The negative electrode current collector generally has a thickness of 3 to 500 µm. Similar to the positive electrode current collector, micro-roughness may be formed on the surface of the negative electrode current collector to enhance adhesion with the negative electrode active material. It may be used in various forms such as films, sheets, foils, nets, porous bodies, foams, or nonwoven fabrics.

The negative electrode active material layer may comprise the negative electrode active material and may optionally further comprise a binder and a conductive agent. For example, the negative electrode active material layer may be manufactured by coating a negative electrode active material layer-forming composition containing the negative electrode active material and, optionally, the binder and the conductive agent on the negative electrode current collector, followed by drying; or by casting the negative electrode active material layer-forming composition onto a separate support, peeling the resulting film, and laminating the film onto the negative electrode current collector.

The negative electrode active material may be any compound capable of reversible intercalation and deintercalation of lithium. Specific examples include carbonaceous materials such as artificial graphite, natural graphite, graphitized carbon fibers, or amorphous carbon; metal compounds capable of forming alloys with lithium, such as Si, Al, Sn, Pb, Zn, Bi, In, Mg, Ga, Cd, Si alloys, Sn alloys, or Al alloys; metal oxides capable of doping and de-doping lithium, such as SiOβ (0 < β < 2), SnO₂, vanadium oxides, and lithium vanadium oxides; or composites comprising a metal compound and a carbonaceous material, such as Si-C composites and Sn-C composites. A thin film of metallic lithium may also be used. Both low-crystallinity and high-crystallinity carbons may be used. Low-crystallinity carbons include soft carbon and hard carbon, and high-crystallinity carbons include amorphous, flake, platelet, spherical, or fibrous natural or artificial graphite, kish graphite, pyrolytic carbon, mesophase pitch-based carbon fibers, meso-carbon microbeads, mesophase pitches, and petroleum- or coal-tar-derived cokes.

The binder and conductive agent may be the same as those described above with respect to the positive electrode.

Depending on the type of lithium secondary battery, a separator may be disposed between the positive electrode and the negative electrode. Such a separator may be a single-layer or multilayer film of polyethylene, polypropylene, polyvinylidene fluoride, or combinations thereof. Examples include polyethylene/polypropylene dual-layer separators, polyethylene/polypropylene/polyethylene triple-layer separators, and polypropylene/polyethylene/polypropylene triple-layer separators.

In the lithium secondary battery, the electrolyte may include an organic liquid electrolyte, an inorganic liquid electrolyte, a solid polymer electrolyte, a gel polymer electrolyte, a solid inorganic electrolyte, or a molten inorganic electrolyte, but is not limited thereto.

The organic liquid electrolyte may include an organic solvent and a lithium salt. The organic solvent may be any solvent capable of serving as a medium through which ions involved in the electrochemical reactions of the battery can migrate. Specific examples include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohols such as ethanol and isopropyl alcohol; nitriles of the formula R-CN (where R is a C₂-C₂₀ linear, branched, or cyclic hydrocarbon group optionally containing an unsaturated bond, an aromatic ring, or an ether linkage); amides such as dimethylformamide; dioxolanes such as 1,3-dioxolane; and sulfolanes. Carbonate-based solvents are particularly preferred, and a mixture of a cyclic carbonate (e.g., EC or PC), which has high ionic conductivity and high dielectric constant, and a low-viscosity linear carbonate (e.g., EMC, DMC, or DEC) is more preferred. The cyclic carbonate and linear carbonate may be mixed in a volume ratio of about 1:1 to about 1:9.

The lithium salt may be any compound capable of providing lithium ions for the lithium secondary battery. Examples include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂. The lithium salt concentration is preferably in the range of 0.1 to 2.0 M. When the concentration is within this range, the electrolyte exhibits suitable conductivity and viscosity, enabling effective lithium-ion transport.

As described above, the lithium secondary battery comprising the positive electrode active material of the present invention exhibits excellent discharge capacity, output characteristics, and capacity retention, and is therefore useful for portable devices such as mobile phones, laptop computers, and digital cameras, as well as for electric vehicle applications, including hybrid electric vehicles (HEVs).

### [Best Mode for Carrying Out the Invention]

Hereinafter, exemplary embodiments of the present invention will be described in detail. However, these embodiments are provided merely for illustrative purposes and are not intended to limit the scope of the present invention, which is defined only by the scope of the claims set forth below.

### Example 1 - Doping with Al, Y, and Zr

### (1) Preparation of Positive Electrode Active Material

A precursor having a composition of Ni_{0.90}Co_{0.03}Mn_{0.07}(OH)₂ was prepared, and LiOH·H₂O (Samjeon Chemicals, battery grade) as a lithium raw material and Y₂O₃, ZrO₂, and Al(OH)₃ as dopant raw materials were uniformly mixed with the precursor to prepare a mixture. At this time, the molar ratio of lithium (Li) to the total metals (Me) excluding lithium (Li/Me) was designed to be 1.05, and the dopant raw materials were added such that the precursor contained 2,000 ppm of Zr, 1,200 ppm of Y, and 1,000 ppm of Al.

The mixture was introduced into a calcination furnace under an oxygen atmosphere and preliminarily calcined at 680°C for 6.5 hours to obtain a preliminarily calcined product. Thereafter, the obtained preliminarily calcined product was introduced into a calcination furnace under an oxygen atmosphere, heated, and subjected first to calcination at 890°C for 4 hours, followed by a second calcination at 780°C for 11 hours, thus obtaining a calcined product through a two-step (2-STEP) calcination process.

The calcined product was then pulverized to obtain a single-particle-type metal oxide doped with Al, Y, and Zr.

Co(OH)₂ and Al(OH)₃ were dry-mixed with the obtained single-particle-type metal oxide as coating raw materials, and the mixture was heat-treated at 700°C for 5 hours under an oxygen atmosphere to form a coating layer on the surface, thereby preparing the coated positive electrode active material. In this step, Co(OH)₂ and Al(OH)₃ were mixed such that the resulting metal oxide contained 2.5 mol% Co and 1,000 ppm Al based on the single-particle metal oxide.

### Comparative Example 1

Except that no preliminary calcination was performed, the positive electrode active material in a single-particle form was prepared in the same manner as in Example 1.

### Experimental Example 1 - Measurement of Under-Grown Particle Count

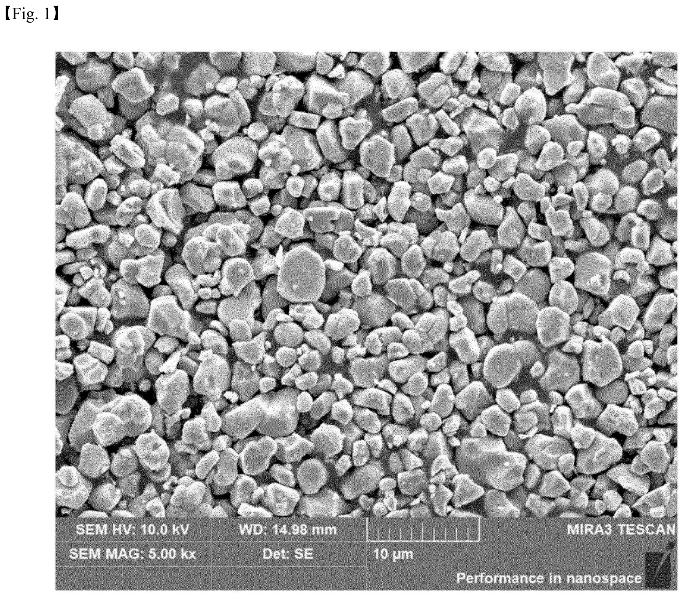

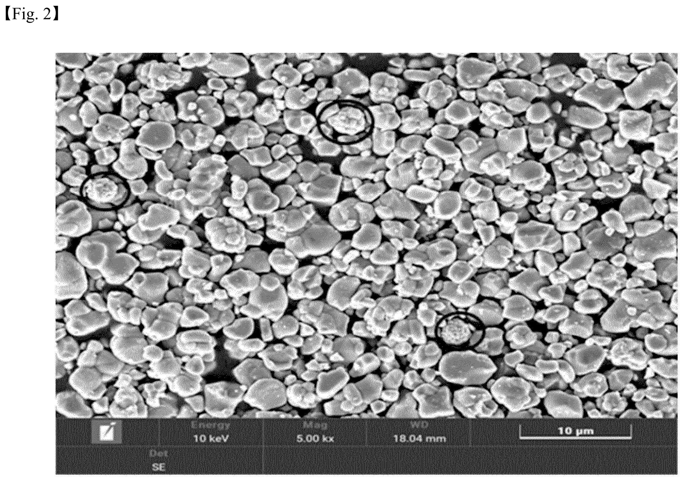

FIGS. 1 and 2 show the results obtained by observing the positive electrode active materials prepared in Example 1 and Comparative Example 1, respectively, in SEM images having a size of 2.5 cm × 1.0 cm at 5,000× magnification.

Referring to FIGS. 1 and 2, the positive electrode active material prepared through preliminary calcination according to Example 1 did not include any under-grown particles, whereas under-grown particles were observed in the positive electrode active material prepared without preliminary calcination in Comparative Example 1.

### Experimental Example 2 - Measurement of Particle Cracking

The degree of particle cracking was measured using the positive electrodes prepared according to Example 1 and Comparative Example 1, and the results are shown in Table 1. Specifically, 10 g of the positive electrode active material was mixed with 3.5 g of NMP and cast onto an aluminum foil (Al foil) having a thickness of 20 µm (70 mm × 210 mm). The coated foil was dried in a 120°C convection oven for 30 minutes. Thereafter, an aluminum foil of the same size was placed on top of the dried active material-coated foil to prepare a sample.

The sample was pressed five times using a roll press at a press gauge of 0.01 mm, and 2 g of the resulting active material was collected. The collected active material was subjected to particle size analysis using a Malvern MS3000 analyzer to determine the amount of fines generated. The degree of particle cracking was represented by the sum of the volume percentage (Vol%) of fines having a particle size of less than 1 µm in the particle size distribution results.

**[Table 1]**

| Sample | Particle Cracking |
|---|---|
| Example 1 | 2.37 vol% |
| Comparative Example 1 | 3.05 vol% |

Referring to Table 1, it can be seen that Example 1, which was manufactured by performing a preliminary calcination step followed by a 2-STEP calcination process, exhibits a significantly lower fine-generation rate compared to Comparative Example 1, in which the positive electrode active material was manufactured without performing preliminary calcination.

### Experimental Example 3 - Measurement of Production Yield

For the positive electrode active materials prepared according to Example 1 and Comparative Example 1, the saggar loading amount was measured as follows.

The results are shown in Table 2 below.

**[Table 2]**

| Sample | Saggar loading amount |
|---|---|
| Example 1 | 4.5 kg |
| Comparative Example 1 | 1.6 kg |

Referring to Table 2, it can be seen that the saggar loading amount of Example 1 is more than 2.5 times that of Comparative Example 1. This confirms that, when the positive electrode active material is manufactured according to the present embodiment, the production yield can be effectively increased.

### Experimental Example 4 - Measurement of Residual Lithium

For the positive electrode active materials prepared according to Example 1 and Comparative Example 1, the residual lithium content was measured using a T50 model manufactured by METTLER TOLEDO.

The results are shown in Table 3 below.

**[Table 3]**

| Residual Lithium | LH (wt.%) | LC (wt.%) | LH/LC |
|---|---|---|---|
| Example 1 | 0.4001 | 0.3193 | 1.3 |
| Comparative Example 1 | 0.7867 | 0.1067 | 7.4 |

Referring to Table 3, it can be seen that the ratio of lithium hydroxide to lithium carbonate (LiOH/Li₂CO₃) among the surface residual lithium of Example 1, which was manufactured by performing a preliminary calcination step followed by a 2-STEP calcination process, is significantly lower than that of Comparative Example 1, in which the positive electrode active material was manufactured without performing preliminary calcination.

The present invention is not limited to the foregoing embodiments and may be practiced in various other forms. It will be understood by those skilled in the art that various modifications and alterations can be made without departing from the spirit or essential characteristics of the invention. Therefore, the embodiments described above should be regarded as illustrative in all respects and not restrictive.

## Claims

1. A method for preparing a positive electrode active material for a lithium secondary battery, comprising:
preparing a metal hydroxide comprising nickel, cobalt, and manganese;
mixing the metal hydroxide with a lithium raw material and dopant raw materials to prepare a mixture;
pre-calcining the mixture to obtain a pre-calcined product;
calcining the pre-calcined product in a two-step process comprising a first-step calcination and a second-step calcination to obtain a calcined material in a single-particle form; and
mixing the calcined material with coating raw materials and heat-treating the mixture to obtain a metal oxide having a coating layer formed thereon,
wherein, in the step of obtaining the calcined material, the first-step calcination is performed at a temperature of 870°C to 915°C for 2 hours to 6 hours hours.

2. The method of claim 1, wherein the pre-calcination is performed at a temperature of 650°C to 770°C for 3 hours to 10 hours.

3. The method of claim 1, wherein the second-step calcination is performed at a temperature of 750°C to 870°C for 5 hours to 14 hours.

4. The method of claim 1, wherein, in the step of preparing the mixture, the dopant raw materials comprise an Al raw material, a Y raw material, and a Zr raw material.

5. The method of claim 4, wherein the Al raw material is mixed in an amount of 500 ppm to 1000 ppm based on the metal hydroxide.

6. The method of claim 4, wherein the Y raw material is mixed in an amount of 500 ppm to 1200 ppm based on the metal hydroxide.

7. The method of claim 4, wherein the Zr raw material is mixed in an amount of 500 ppm to 2000 ppm based on the metal hydroxide.

8. The method of claim 1, wherein the coating raw materials comprise a Co coating raw material and an Al coating raw material.

9. The method of claim 8, wherein the Co coating raw material is mixed in an amount of 1.5 mol% to 3 mol% based on the calcined material.

10. The method of claim 8, wherein the Al coating raw material is mixed in an amount of 500 ppm to 1500 ppm based on the calcined material.

11. The method of claim 1, wherein the heat treatment for obtaining the metal oxide having the coating layer is performed at a temperature of 660°C to 760°C for 3 hours to 8 hours.

12. The method of claim 1, wherein, in the step of obtaining the calcined material, a charge amount of the pre-calcined product loaded into the calcination furnace is 4 kg or more.

13. A positive electrode active material for a lithium secondary battery, comprising:
a nickel-containing metal oxide in a single-particle form; and
a coating layer disposed on a surface of the nickel-containing metal oxide,
wherein the nickel-containing metal oxide comprises at least three kinds of dopant elements, and
wherein, when the metal oxide having the coating layer is magnified 5000 times and measured in a SEM image having a size of 2.5 cm × 1.0 cm, the number of non-grown particles is two or fewer.

14. The positive electrode active material of claim 13, wherein a ratio of lithium hydroxide to lithium carbonate among the residual lithium on the surface of the positive electrode active material (LiOH/Li₂CO₃) is in a range of 1.0 to 2.0.

15. The positive electrode active material of claim 13, wherein, when the positive electrode active material is pressed five times using a roll press at a press gauge of 0.01 mm, the total amount of fine particles having a particle size of less than 1 µm is 2.5 vol% or less.

16. A positive electrode for a lithium secondary battery comprising the positive electrode active material prepared according to any one of claims 1 to 12.

17. A lithium secondary battery comprising the positive electrode of claim 16.
